# EUROPÄISCHE PATENTSCHRIFT

(11) **EP 0 698 257 B1**
(45) Veröffentlichungstag und Bekanntmachung des Hinweises auf die Patenterteilung: **30.07.1997**
(21) Anmeldenummer: 94913444.9
(22) Anmeldetag: 03.05.1994
(51) Int. Cl.: G06K 19/18

(54) **KARTENFÖRMIGER DATENTRÄGER UND VERFAHREN ZUR HERSTELLUNG EINES DATENTRÄGERS**
CARD-LIKE DATA CARRIER AND PROCESS FOR PRODUCING IT
SUPPORT DE DONNEES SE PRESENTANT SOUS FORME DE CARTE ET PROCEDE DE REALISATION D'UN SUPPORT DE DONNEES

(30) Priorität: 03.05.1993 AT 859/93
(43) Veröffentlichungstag der Anmeldung: 28.02.1996
(73) Patentinhaber: SKIDATA COMPUTER GESELLSCHAFT m.b.H., A-5083 Gartenau (AT)
(72) Erfinder: KOCZNAR, Wolfram, A-6020 Innsbruck (AT)
(74) Vertreter: Hofinger, Engelbert, DDr.
(86) Internationale Anmeldenummer: AT9400058
(87) Internationale Veröffentlichungsnummer: WO9427255

(56) Entgegenhaltungen:
- WO-A-92/21105
- US-A- 4 330 350
- US-A- 4 904 853

## Beschreibung

Die Erfindung betrifft einen kartenförmigen Datenträger, insbesondere Fahrkarte, Skipaß oder dergleichen, mit einem Kartenkörper, und mit einem im Inneren des Kartenkörpers angeordneten Elektronikmodul, das mit einem Sende-Empfangsteil zur berührungslosen Kontrolle durch eine einen Sende-Empfangsteil aufweisende Kontrollstation versehen ist, wobei zumindest an einer Seite des Kartenkörpers eine Außenschicht mit einer thermosensitiven Beschichtung für eine visuell lesbare Datendarstellung und ein Inhaberbild angeordnet sind.

Ein derartiger Datenträger ist beispielsweise der WO-A 92/21105 zu entnehmen. Die Beschriftung der auf den Kartenkörper aufgebrachten thermosensitiven Beschichtung läßt sich nicht mehr entfernen, sodaß der Datenträger vorwiegend über einen längeren Zeitraum verwendet wird, beispielsweise als Saisonkarte, oder dergleichen.

Die Erfindung hat es sich nun zur Aufgabe gestellt, einen derartigen Datenträger wiederverwendbar zu machen, und erreicht dies dadurch, daß die Außenschicht eine mit einem Teilbereich für das Inhaberbild versehene, mit dem Kartenkörper lösbar verbindbare, transparente Selbstklebefolie aufweist, die entlang eines Randstreifens auf den Kartenkörper aufgeklebt ist, und im verbleibenden Bereich der Klebstoffbeschichtung von einem abziehbaren Schutzpapier bedeckt ist.

Auf diese Weise kann die die beschriftete thermosensitive Beschichtung aufweisende Außenschicht nach Ablauf der Gültigkeit abgelöst werden, sodaß der verbleibende Kartenkörper, mit einer neuen Außenschicht versehen, wieder einer neuen Verwendung zugeführt werden kann.

Das Elektronikmodul ist dabei so ausgebildet, daß es für die Wiederverwendung neu beschreibbar ist, und enthält beispielsweise ein EEPROM, also einen wiederbeschreibbaren Nurlesespeicher.

Aus der US-A 4,330,350 ist ein Datenträger bekannt, der unter einer transparenten Deckschicht eine gegen ein mit einem Foto versehenes Datenblatt austauschbare Einlage aufweist. Der Datenträger, der kein Elektronikmodul enthält, ist nicht wiederverwendbar, das heißt, das Datenblatt kann nicht mehr gegen ein anderes ausgetauscht werden.

Aus der US-A 4,904,853 ist ein Datenträger bekannt, der einen Kartenkörper mit einem entlang eines Randes lösbar befestigten, eine Darstellung tragenden transparenten Blatt aufweist. Das Blatt umfaßt keine Selbstklebefolie und daher auch kein abziehbares Schutzpapier. Ein Austausch des Blattes und die Anbringung eines anderen Blattes für eine zweite Verwendung des ein Elektronikmodul enthaltenden Kartenkörpers ist nicht vorgesehen.

Vorzugsweise ist ein weiterer Teilbereich der Selbstklebefolie bedruckt. Die thermosensitive Beschichtung ist insbesondere in dem vom abziehbaren Schutzpapier bedeckten Restbereich vorgesehen, sodaß nur die am Kartenkörper hängende, zurückgeklappte Selbstklebefolie samt Schutzpapier in den Thermodrucker eingelegt werden muß, nicht jedoch der gesamte Kartenkörper. Die thermosensitive Beschichtung ist insbesondere an der Außenseite der Selbstklebefolie vorgesehen und mit einem UV-Lack überzogen.

Hinsichtlich des Inhaberbildes sieht eine erste Möglichkeit vor, daß der Teilbereich für das Inhaberbild als Fenster im bedruckten Teilbereich vorgesehen ist und ein Inhaberfoto zwischen die Selbstklebefolie und den Kartenkörper einlegbar ist. Das Foto kann natürlich auch außerhalb des bedruckten Bereiches angeordnet sein. Auch für die Unterbringung des Fotos ist es von Vorteil, wenn die Selbstklebefolie nur entlang des Randstreifens am Kartenkörper fixiert ist, da das Foto durch die Selbstklebefolie festgeklebt wird.

Um eine ebene Außenfläche zu erzielen, ist im Kartenkörper bevorzugt eine Vertiefung für das Inhaberfoto oder eine entfernbare Einlage ausgebildet. Die ebene Außenfläche liegt somit auch dann vor, wenn kein Foto eingesetzt wird. Die Einlage besteht beispielsweise aus einem silikonierten Papier in der Dicke eines üblichen Fotopapiers.

In einer zweiten Möglichkeit ist vorgesehen, daß der Teilbereich für das Inhaberbild ebenfalls eine thermosensitive Beschichtung aufweist. Dies erlaubt es, ein Bild des Inhabers gleichzeitig mit den übrigen Daten aufzudrucken.

Wenn der Kartenkörper die entfernbare Einlage aufweist, so kann ein einziger Rohling, je nach den Gegebenheiten mit einem Foto versehen werden, das anstelle der Einlage in die Vertiefung eingesetzt wird, oder durch Wärmeeinwirkung auf die thermosensitive Beschichtung mit dem Bild versehen werden.

In einer weitern bevorzugten Ausführung ist vorgesehen, daß der Kartenkörper einen Randwulst aufweist, innerhalb dessen die Außenschicht angeordnet ist. Der Randwulst umrahmt somit die Außenschicht und bildet einen Schutz für den Rand der Selbstklebeschicht.

Bei der Herstellung eines Datenträgers wird insbesondere so vorgegangen, daß ein Elektronikmodul zwischen zwei Folien aus einem thermoplastischen Kunststoff gelegt wird, die unter Anwendung von Druck und Wärme zum Kartenkörper verpreßt werden und anschließend zumindest einseitig eine lösbare Außenschicht angebracht wird, die eine thermosensitive Beschichtung aufweist.

Die Fertigstellung des Datenträgers erfolgt dann insbesondere in der Weise, daß die Selbstklebefolie entlang eines Randstreifens auf den Kartenkörper aufgeklebt wird, wobei der verbleibende Bereich durch das abziehbare Schutzpapier bedeckt bleibt, und daß bei der Ausgabe des Datenträgers der thermosensitive Bereich der mit dem Schutzpapier versehenen Selbstklebefolie bedruckt oder das Inhaberfoto eingeschoben wird, und, nach Entfernung des Schutzpapiers, die Selbstklebefolie auf den Kartenkörper vollflächig aufgeklebt wird.

Nachstehend wird nun die Erfindung an Hand der Figuren der beiliegenden Zeichnungen näher beschrieben, ohne darauf beschränkt zu sein.

Es zeigen:
- Fig. 1: eine Draufsicht auf einen erfindungsgemäßen Datenträger,
- Fig. 2 und 3: Längsschnitte durch zwei verschiedene Ausführungen des Datenträgers,

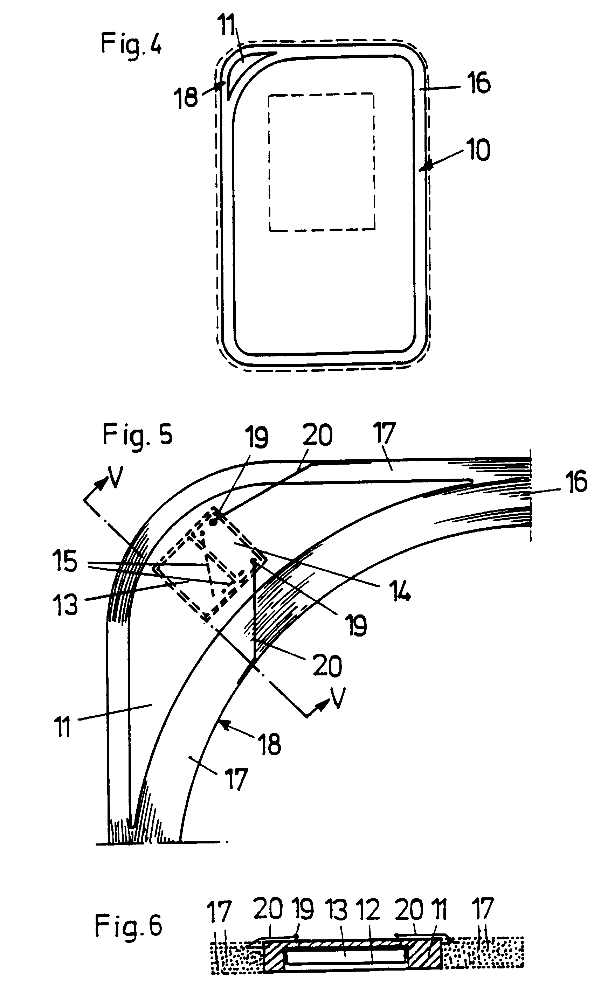

- Fig. 4: eine Draufsicht auf ein in den Datenträger einsetzbares Elektronikmodul,
- Fig. 5: vergrößert den den IC-Baustein tragenden Eckbereich der Fig. 4, und
- Fig. 6: einen Schnitt nach der Linie V-V der Fig. 5.

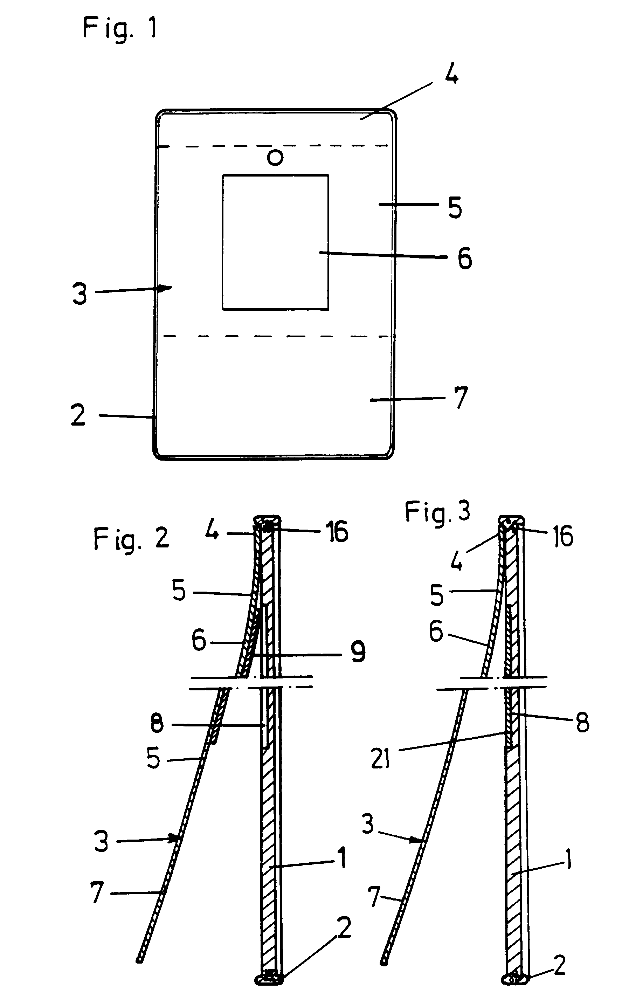

Ein kartenförmiger Datenträger ist in Fig. 1 bis 3 dargestellt und weist einen Kartenkörper 1 auf, der aus zwei miteinander unter Druck und Wärme verpreßten, gegebenenfalls vorgefertigten Kunststoffelementen besteht. Wie insbesondere aus Fig. 2 und 3 ersichtlich, ist der Kartenkörper 1 von einem Randwulst 2 umgeben, sodaß an beiden Seiten eine Oberflächenvertiefung ausgebildet ist. In dieser ist eine eine Selbstklebefolie aufweisende Außenschicht 3 lösbar angeordnet, die somit austauschbar ist. Die Selbstklebefolie ist transparent, und weist einen mit einer thermosensitiven Beschichtung 7 versehenen ersten Teilbereich, einen zweiten insbesondere bedruckten Teilbereich 5, einen dritten Teilbereich 6 für ein Inhaberbild und einen oberen Randstreifen 4 auf. Die Bereiche 5,6 und 7 sind mit einem abziehbaren Schutzpapier überzogen, sodaß nur der obere Randstreifen auf dem Kartenkörper 1 festgeklebt ist. Der Teilbereich 6 für das Inhaberbild ist gemäß Fig. 2 durchsichtig, um ein darunter angeordnetes Foto erkennen zu können, oder ebenfalls mit einer thermosensitiven Beschichtung versehen, um das Bild mittels eines Thermodruckers gleichzeitig mit den auf den Beschriftungsbereich aufzudruckenden Daten herzustellen. Wird ein Foto 9 verwendet, so wird es mittels der transparenten Selbstklebefolie am Kartenkörper 1 fixiert. Eine Vertiefung 8 im Kartenkörper 1 nimmt entweder das Foto 9 auf (Fig. 2) oder eine Einlage 21 (Fig. 3), sodaß der Datenträger eine ebene Oberfläche aufweist. Die Einlage 21 wird bevorzugt bei der Herstellung im Kartenkörper 1 angeordnet, und wird entfernt, wenn ein Foto 9 eingesetzt wird. Die Einlage 21 besteht insbesondere aus einem silikonierten Papier, das aus der Vertiefung 8 leicht entfernbar ist. Der thermosensitive Bereich 7 wird bevorzugt bedruckt, bevor das Schutzpapier entfernt wird. Dabei ist es möglich, die Selbstklebefolie nach hinten zu klappen, und sie mit dem Schutzpapier in den Thermodrucker einzuschieben. Andererseits kann der Datenträger auch in der in Fig. 1 gezeigten Position der Selbstklebefolie bedruckt werden, da in diesem Fall das Schutzpapier, dessen Dicke etwa der Tiefe der durch den Randwulst 2 gebildeten Oberflächenvertiefung entspricht, den thermosensitiven Bereich 7 der Außenschicht aus der Oberflächenvertiefung anhebt. In die Oberflächenvertiefung an der zweiten Seite des Kartenkörpers 1 ist bevorzugt ebenfalls eine Außenschicht lösbar eingesetzt. An dieser Seite ist beispielsweise die Anbringung einer Verzierung, einer Werbung für den Verwendungszweck usw. möglich; es kann natürlich auch hier ein thermosensitiver Bereich vorgesehen sein.

Im Kartenkörper 1 ist zwischen zwei Kunststoffschichten, beispielsweise aus einem nach geringer Erwarmung verpreßbaren und verklebenden, bzw. verschmelzenden, thermoplastischen Material, ein Elektronikmodul vorgesehen, das einen IC-Baustein 13, einen Kondensator 14 und eine Antenne 16 aufweist. Die Antenne besteht aus einer größeren Anzahl, beispielsweise 135 ovalen Windungen eines Drahtes von etwa 0,1 mm Durchmesser, die einen Träger 11 einschließen und fixieren. Der Träger 11 weist eine Vertiefung 12 auf, in der der IC-Baustein 13 und der mit dem IC-Baustein 13 über Drähte 15 verbundene Kondensator 14 angeordnet sind. Der Kondensator 14 weist Anschlüsse 19 auf, die den Boden der Vertiefung 12 durchsetzen, und an denen die Enden 20 der Antenne 16 fixiert sind. Die Anschlüsse 19 halten daher den Kondensator 14 und den damit verdrahteten IC-Baustein 13 in der Vertiefung 12 des Trägers 11, der durch einen sichelförmigen Kunststoffkörper gebildet und in einem Bogenabschnitt 18 der Antenne 16 zwischen deren Windungen 17 gehalten ist. Der freie Raum der Vertiefung 12 wird nach der Montage des IC-Bausteines 13 und des Kondensators 14 mit einer Vergußmasse ausgefüllt. Vorteilhaft werden die Träger 11 zusammenhängend in größeren Platten mit IC-Bausteinen 13 und Kondensatoren 14 bestückt und dann voneinander getrennt. Da die Versorgung mit Energie ebenso wie die Datenübertragung über die Antenne 16 erfolgt, sind die Datenträger unbegrenzt einsetzbar. Alle visuell sichtbaren Daten und anderen Informationen sind auf den lösbaren Außenschichten 3 angeordnet. Die Datenträger können daher nach Ablauf der Gültigkeit an den Hersteller retourniert werden, der die Außenschichten 3 entfernt. Der verbleibende Kartenkörper 1 ist völlig neutral und kann, versehen mit neuen, noch nicht thermisch bedruckten Außenschichten 3 wieder an eine Initialisierungsstelle übergeben werden, die durch thermisches Bedrucken mit den Berechtigungsdaten einen neuen, vollwertigen Datenträger schafft. Bevorzugt werden daher die erfindungsgemäßen Datentrager auch gegen Pfand ausgegeben. Ein eventuell anzubringendes Inhaberbild wird wiederum entweder durch Wärmeeinwirkung auf den Teilbereich 6 oder durch ein Foto 9 des neuen Inhabers vorgesehen. Die Vertiefung 8 kann dabei wiederum mit einer entfernbaren Einlage 21 gefüllt sein, die entweder in die Vertiefung 8 eingeklebt oder an der selbstklebenden Außenschicht 3 fixiert ist.

## Patentansprüche

1. Kartenförmiger Datenträger, insbesondere Fahrkarte, Skipaß od.dgl., mit einem Kartenkörper (1), und mit einem im Inneren des Kartenkörpers (1) angeordneten Elektronikmodul (10), das mit einem Sende-Empfangsteil zur berührungslosen Kontrolle durch eine einen Sende-Empfangsteil aufweisende Kontrollstation versehen ist, wobei zumindest an einer Seite des Kartenkörpers (1) eine Außenschicht mit einer thermosensitiven Beschichtung (7) für eine visuell lesbare Datendarstellung und ein Inhaberbild angeordnet sind, dadurch gekennzeichnet, daß die Außenschicht eine mit einem Teilbereich (6) für das Inhaberbild versehene, mit dem Kartenkörper (1) lösbar verbindbare, transparente Selbstklebefolie (3) aufweist, die entlang eines Randstreifens (4) auf den Kartenkörper (1) aufgeklebt ist, und im verbleibenden Bereich der Klebstoffbeschichtung von einem abziehbaren Schutzpapier bedeckt ist.

2. Datenträger nach Anspruch 1, dadurch gekennzeichnet, daß ein weiterer Teilbereich (5) der Selbstklebefolie (3) bedruckt ist.

3. Datenträger nach Anspruch 1 und 2, dadurch gekennzeichnet, daß der Teilbereich (6) für das Inhaberbild als Fenster im bedruckten Teilbereich (5) vorgesehen ist, und ein Inhaberfoto (9) zwischen die Selbstklebefolie und den Kartenkörper (1) einlegbar ist.

4. Datenträger nach Anspruch 1 und 2, dadurch gekennzeichnet, daß der Teilbereich (6) der Selbstklebefolie (3) für das Inhaberbild ebenfalls eine thermosensitive Beschichtung aufweist.

5. Datenträger nach Anspruch 4, dadurch gekennzeichnet, daß die thermosensitive Beschichtung der Selbstklebefolie (3) mit einem UV-Lack-Überzug versehen ist.

6. Datenträger nach Anspruch 3 oder 4, dadurch gekennzeichnet, daß der Kartenkörper (1) eine Vertiefung (8) für das Inhaberfoto (9) oder eine entfernbare Einlage (21) aufweist.

7. Datenträger nach einem der Ansprüche 1 bis 6, dadurch gekennzeichnet, daß der Kartenkörper (1) einen Randwulst (2) aufweist, innerhalb dessen die Außenschicht angeordnet ist.

8. Verfahren zur Herstellung eines Datenträgers nach Anspruch 1, dadurch gekennzeichnet, daß ein Elektronikmodul (10) zwischen zwei Folien aus einem thermoplastischen Kunststoff gelegt wird, die unter Anwendung von Druck und Wärme zum Kartenkörper (1) verpreßt werden und anschließend zumindest einseitig eine lösbare Außenschicht (3) angebracht wird, die eine thermosensitive Beschichtung (7) aufweist.

9. Verfahren nach Anspruch 8, dadurch gekennzeichnet, daß eine Selbstklebefolie entlang eines Randstreifens (4) auf den Kartenkörper (1) aufgeklebt wird, wobei der verbleibende Bereich durch ein abziehbares Schutzpapier bedeckt ist, und daß bei der Ausgabe des Datenträgers der thermosensitive Bereich (7) der mit dem Schutzpapier versehenen Selbstklebefolie bedruckt oder das Inhaberfoto (9) eingeschoben wird, und, nach Entfernung des Schutzpapiers, die Selbstklebefolie auf den Kartenkörper (1) vollflächig aufgeklebt wird.

## Revendications

1. Support de données se présentant sous forme de carte, en particulier titre de transport, forfait de ski ou analogue, comportant un corps de carte (1) et un module électronique (10) qui est disposé à l'intérieur du corps de carte (1) et est équipé d'un élément émetteur-récepteur en vue d'un contrôle sans contact par une station de contrôle présentant un élément émetteur-récepteur, une couche extérieure pourvue d'un revêtement (7) thermosensible pour une représentation de données visuellement lisible et une photo de titulaire étant disposées au moins sur un côté du corps de carte (1), caractérisé en ce que la couche extérieure comporte une feuille autocollante (3) transparente qui présente une zone partielle (6) pour la photo de titulaire et est reliée de manière amovible au corps de carte (1), laquelle feuille autocollante est collée sur une bande marginale (4) sur le corps de carte (1) et est recouverte par un papier de protection pelable sur le reste du revêtement de colle.

2. Support de données selon la revendication 1, caractérisé en ce qu'une autre zone partielle (5) de la feuille autocollante (3) est imprimée.

3. Support de données selon les revendications 1 et 2, caractérisé en ce que la zone partielle (6) pour la photo de titulaire se présente sous la forme d'une fenêtre dans la zone partielle (5) imprimée et une photo de titulaire (9) peut être insérée entre la feuille autocollante et le corps de carte (1).

4. Support de données selon les revendications 1 et 2, caractérisé en ce que la zone partielle (6) de la feuille autocollante (3) pour la photo de titulaire comporte également un revêtement thermosensible.

5. Support de données selon la revendication 4, caractérisé en ce que le revêtement thermosensible de la feuille autocollante (3) est pourvu d'une couche de vernis pour rayons ultraviolets.

6. Support de données selon la revendication 3 ou 4, caractérisé en ce que le corps de carte (1) comporte une cavité (8) pour la photo de titulaire (9) ou un élément rapporté (21) pouvant être enlevé.

7. Support de données selon l'une des revendications 1 à 6, caractérisé en ce que le corps de carte (1) comporte un bourrelet marginal (2) à l'intérieur duquel est disposée la couche extérieure.

8. Procédé de fabrication d'un support de données selon la revendication 1, caractérisé en ce qu'on place un module électronique (10) entre deux feuilles en une matière thermoplastique que l'on comprime sous pression et à chaud pour former le corps de carte (1) puis on applique au moins sur un côté une feuille extérieure (3) détachable qui comporte un revêtement (7) thermosensible.

9. Procédé selon la revendication 8, caractérisé en ce que l'on colle une feuille autocollante sur une bande marginale (4) sur le corps de carte (1), la zone restante étant recouverte par un papier de protection pelable et que lors de la délivrance du support de données, on imprime la zone (7) thermosensible de la feuille autocollante pourvue du papier de protection ou on introduit la photo de titulaire (9) et on colle la feuille autocollante sur toute la surface du corps de carte (1) après avoir enlevé le papier de protection.

## Claims

1. A data carrier in card form, in particular a travel card, ski pass or the like, having a card body (1) and an electronic module (10) which is arranged in the interior of the card body (1) and which is provided with a transmitting-receiving portion for contact-less checking by a checking station having a transmitting-receiving portion, wherein arranged at least at one side of the card body (1) is an external layer with a heat-sensitive coating (7) for a visually readable data representation and a holder picture, characterised in that the external layer has a transparent self-adhesive foil (3) which is provided with a partial region (6) for the holder picture and which can be releasably joined to the card body (1) and which along an edge strip (4) is glued on to the card body (1), and is covered in the remaining region of the adhesive coating by a protective paper which can be pulled off.

2. A data carrier according to claim 1 characterised in that a further partial region (5) of the self-adhesive foil (3) is printed upon.

3. A data carrier according to claim 1 or claim 2 characterised in that the partial region (6) for the holder picture is provided in the form of a window in the partial region (5) which is printed upon, and a holder photograph (9) can be inserted between the self-adhesive foil and the card body (1).

4. A data carrier according to claim 1 and claim 2 characterised in that the partial region (6) of the self-adhesive foil (3) for the holder picture also has a heat-sensitive coating.

5. A data carrier according to claim 4 characterised in that the heat-sensitive coating of the self-adhesive foil (3) is provided with an UV-lacquer covering.

6. A data carrier according to claim 3 or claim 4 characterised in that the card body (1) has a recess (8) for the holder photograph (9) or a removable insert (21).

7. A data carrier according to one of claims 1 to 6 characterised in that the card body (1) has an edge bead (2) within which the external layer is arranged.

8. A process for the production of a data carrier according to claim 1 characterised in that an electronic module (10) is fitted between two foils of a thermoplastic material which are pressed to form the card body (1) by the application of pressure and heat and then a releasable external layer (3) which has a heat-sensitive coating (7) is applied at least at one side.

9. A process according to claim 8 characterised in that a self-adhesive foil is stuck on to the card body (1) along an edge strip (4), wherein the remaining region is covered by a protective paper that can be pulled off, and that upon issue of the data carrier the heat-sensitive region (7) of the self-adhesive foil provided with the protective paper is printed upon or the holder photograph (9) is inserted and, after removal of the protective paper, the self-adhesive foil is stuck on to the card body (1) over the full surface area thereof.
